# EUROPEAN PATENT APPLICATION

(11) **EP 4 797 147 A1**
(43) Date of publication of application: **26.08.2026**
(21) Application number: 24879079.2
(22) Date of filing: 17.10.2024
(51) Int. Cl.: G06F 40/109

(54) **FONT CREATION METHOD AND APPARATUS, COMPUTER DEVICE, AND STORAGE MEDIUM**

(30) Priority: 19.10.2023 CN 202311361769
(71) Applicant: Beijing Zitiao Network Technology Co., Ltd., Beijing 100190 (CN)
(72) Inventor: FENG, Zicheng, Beijing 100028 (CN); LI, Xiaoqi, Beijing 100028 (CN)
(74) Representative: Grünecker Patent- und Rechtsanwälte PartG mbB
(86) International application number: PCT/CN2024/125480
(87) International publication number: WO 2025/082438

(57) **Abstract**

The disclosure provides a method, an apparatus, a computer device, and a storage medium for font creation. The method includes: presenting a to-be-processed character in a target font template in response to selecting the target font template from multiple font templates, where the to-be-processed character is selected from multiple initial characters in the target font template; determining target edit content for the to-be-processed character in response to an edit operation for the to-be-processed character; and editing the multiple initial characters other than the to-be-processed character in the target font template based on the target edit content, to obtain multiple target characters obtained by editing the multiple initial character.

## Description

The present application claims priority to Chinese Patent Application No. 202311361769.1, filed on October 19, 2023, and entitled " METHOD, APPARATUS, COMPUTER DEVICE, AND STORAGE MEDIUM FOR FONT CREATION ", which is incorporated herein by reference in its entirety.

### FIELD

The present disclosure relates to the technical field of font design, and in particular, to a method, an apparatus, a computer device, and a storage medium for font creation.

### BACKGROUND

In scenarios such as adding a title and subtitles to a video, when adding text information, a user may present text in different font formats. However, when different font formats are selected, the selection is limited to the existing font formats provided, and the selection is still limited.

### SUMMARY

In a first aspect, an embodiment of the present disclosure provides a method for font creation, including: presenting a to-be-processed character in a target font template in response to selecting the target font template from multiple font templates, where the to-be-processed character is selected from multiple initial characters in the target font template; determining target edit content for the to-be-processed character in response to an edit operation for the to-be-processed character; and editing the multiple initial characters other than the to-be-processed character in the target font template based on the target edit content, to obtain multiple target characters obtained by editing the multiple initial characters.

In an optional implementation, presenting the to-be-processed character in the target font template includes: presenting the to-be-processed character in a font editing interface, where the font editing interface includes a presenting area for presenting the to-be-processed character and an editable area defined for the to-be-processed character; and determining the target edit content for the to-be-processed character in response to the edit operation for the to-be-processed character includes: taking, in response to the edit operation for the to-be-processed character, edit content obtained in the editable area as the target edit content for the to-be-processed character.

In an optional implementation, determining the target edit content for the to-be-processed character in response to the edit operation for the to-be-processed character includes: generating, in response to receiving edit description content for the to-be-processed character, the target edit content for the to-be-processed character under the edit description content based on the edit description content by using an image generation mode.

In an optional implementation, the to-be-processed character is selected from the multiple initial characters in the target font template by: determining a character feature set matching the multiple initial characters, where the character feature set includes multiple character features, and any initial character has at least one corresponding character feature in the character feature set; and selecting, from the multiple initial characters, at least one character whose character features comprise multiple character features in the character feature set, as the to-be-processed character.

In an optional implementation, editing the multiple initial characters other than the to-be-processed character in the target font template based on the target edit content, to obtain the multiple target characters obtained by editing the multiple initial characters includes: determining, based on the target edit content, a target character feature selected in response to performing the edit operation on the to-be-processed character, and corresponding edit content under the target character feature; and editing the multiple initial characters other than the to-be-processed character based on the edit content under the target character feature and character features respectively possessed by the multiple initial characters other than the to-be-processed character, to obtain the multiple target characters obtained by editing the multiple initial characters.

In an optional implementation, the multiple target characters are configured to construct a target font library, and the method further includes: obtaining, in response to selecting the target font library for subtitle editing, target characters respectively corresponding to the multiple subtitle characters from the target font library and based on multiple subtitle characters included in received subtitle information; and arranging sequentially the target characters respectively corresponding to the multiple subtitle characters based on a character sequence corresponding to the multiple subtitle characters, to generate a target subtitle to be presented.

In an optional implementation, after generating the target subtitle to be presented, the method further includes: presenting, in response to the target subtitle including a target phrase composed of sequentially arranged subtitle characters and a to-be-presented picture associated with the target phrase being stored in a predetermined subtitle picture library, the to-be-presented picture in association based on a presenting position of the target phrase in the target subtitle.

In a second aspect, an embodiment of the present disclosure further provides an apparatus for font creation, including: a presenting module configured to present a to-be-processed character in a target font template in response to selecting the target font template from multiple font templates, where the to-be-processed character is selected from multiple initial characters in the target font template; a determining module configured to determine target edit content for the to-be-processed character in response to an edit operation for the to-be-processed character; and an editing module configured to edit the multiple initial characters other than the to-be-processed character in the target font template based on the target edit content, to obtain multiple target characters obtained by editing the multiple initial characters.

In an optional implementation, when presenting the to-be-processed character in the target font template, the presenting module is configured to: present the to-be-processed character in a font editing interface, where the font editing interface includes a presenting area for presenting the to-be-processed character and an editable area defined for the to-be-processed character; and when determining the target edit content for the to-be-processed character in response to the edit operation for the to-be-processed character, the determining module is configured to: take, in response to the edit operation for the to-be-processed character, edit content obtained in the editable area as the target edit content for the to-be-processed character.

In an optional implementation, when determining the target edit content for the to-be-processed character in response to the edit operation for the to-be-processed character, the determination module is configured to: generate, in response to receiving edit description content for the to-be-processed character, the target edit content for the to-be-processed character under the edit description content based on the edit description content by using an image generation mode.

In an optional implementation, the to-be-processed character is selected from the multiple initial characters in the target font template by: determining a character feature set matching the multiple initial characters, where the character feature set includes multiple character features, and any initial character has at least one corresponding character feature in the character feature set; and selecting, from the multiple initial characters, at least one character whose character features comprise multiple character features in the character feature set, as the to-be-processed character.

In an optional implementation, when editing the multiple initial characters other than the to-be-processed character in the target font template based on the target edit content, to obtain the multiple target characters obtained by editing the multiple initial characters, the editing module is configured to: determine, based on the target edit content, a target character feature selected in response to performing the edit operation on the to-be-processed character and corresponding edit content under the target character feature; and edit the multiple initial characters other than the to-be-processed character based on the edit content under the target character feature and character features respectively possessed by the multiple initial characters other than the to-be-processed character, to obtain the multiple target characters obtained by editing the multiple initial characters.

In an optional implementation, the multiple target characters are configured to construct a target font library, and the apparatus further includes a processing module, configured to: obtain, in response to selecting the target font library for subtitle editing, acquire, target characters respectively corresponding to the multiple subtitle characters from the target font library and based on multiple subtitle characters included in received subtitle information; and arrange sequentially the target characters respectively corresponding to the multiple subtitle characters based on a character sequence corresponding to the multiple subtitle characters, to generate a target subtitle to be presented.

In an optional implementation, after generating the target subtitle to be presented, the processing module is further configured to: present, in response to the target subtitle including a target phrase composed of sequentially arranged subtitle characters and a to-be-presented picture associated with the target phrase being stored in a predetermined subtitle picture library, present the to-be-presented picture in association based on a presenting position of the target phrase in the target subtitle.

In a third aspect, an optional implementation of the present disclosure further provides a computer device, including a processor and a memory, where the memory stores machine-readable instructions executable by the processor, the processor is configured to execute the machine-readable instructions stored in the memory, and the machine-readable instructions, when executed by the processor, performs the steps of the first aspect or any possible implementations of the first aspect.

In a fourth aspect, an optional implementation of the present disclosure further provides a computer-readable storage medium having a computer program stored thereon, where the computer program, when run, performs the steps of the first aspect or any possible implementations of the first aspect.

In order to make the above objectives, features, and advantages of the present disclosure more comprehensible, preferred embodiments are provided and described in detail below with reference to the drawings.

### BRIEF DESCRIPTION OF DRAWINGS

In order to more clearly describe the technical solutions in the embodiments of the present disclosure, the following briefly introduces the drawings used in the description of the embodiments. The drawings herein are incorporated into and constitute a part of the specification. These drawings illustrate embodiments consistent with the present disclosure and, together with the specification, serve to explain the technical solutions of the present disclosure. It should be understood that the following drawings illustrate only some embodiments of the present disclosure and, therefore, should not be construed as limiting the scope. For those of ordinary skill in the art, other related drawings may also be obtained from these drawings without creative efforts.
Fig. 1 illustrates a flowchart of a method for font creation according to an embodiment of the present disclosure;
Fig. 2 illustrates different presenting forms of a same character in multiple font templates according to an embodiment of the present disclosure;
Fig. 3 illustrates a schematic diagram of selecting a target font template according to an embodiment of the present disclosure;
Fig. 4 illustrates a schematic diagram of a font editing page according to an embodiment of the present disclosure;
Fig. 5 illustrates a presenting page of a selected to-be-processed character after editing according to an embodiment of the present disclosure;
Fig. 6a illustrates a schematic page diagram of using an image generation model to edit a to-be-processed character according to an embodiment of the present disclosure;
Fig. 6b illustrates a schematic diagram of target edit content for a to-be-processed character according to an embodiment of the present disclosure;
Fig. 7 illustrates a schematic diagram of an edited target character according to an embodiment of the present disclosure;
Fig. 8 illustrates a schematic page diagram of adding subtitle information according to an embodiment of the present disclosure;
Fig. 9 illustrates a schematic diagram of presenting an associated to-be-presented picture in a target phrase according to an embodiment of the present disclosure;
Fig. 10 illustrates a schematic diagram of an apparatus for font creation according to an embodiment of the present disclosure; and
Fig. 11 illustrates a schematic diagram of a computer device according to an embodiment of the present disclosure.

### DETAILED DESCRIPTION

In order to make the objectives, technical solutions, and advantages of embodiments of the present disclosure more clear, the technical solutions in the embodiments of the present disclosure will be described clearly and comprehensively with reference to the drawings in the embodiments of the present disclosure. Obviously, the described embodiments are only some embodiments of the present disclosure, rather than all the embodiments. Components of the embodiments of the present disclosure, which are described and illustrated herein, may be usually arranged and designed in various different configurations. Therefore, the following detailed description of the embodiments of the present disclosure is not intended to limit the scope of the claimed present disclosure, but rather represents selected embodiments of the present disclosure. All other embodiments obtained by those skilled in the art without creative efforts based on the embodiments of the present disclosure belong to the protection scope of the present disclosure.

It has been found through research that in scenarios such as adding a title and subtitles to a video, a user is usually presented with multiple designed font formats, and the user may select a font format to make text more stylistic. However, in this manner, it is still limited to providing the user with the created font formats, and the user may only select from these provided font formats. Therefore, there is still a limitation in selecting font format.

Based on the above research, the present disclosure provides a method for font creation. In the method, a user may be provided with a font template, and for a target font template selected by the user, a basic font format may be presented to the user specifically by presenting a to-be-processed character in the target font template. For the presented to-be-processed character, edit content for the to-be-processed character may be determined specifically in response to an edit operation, so that the user may design a font format according to the user's own preference and creation needs for the font format.

In order to design multiple characters while minimizing user operations as much as possible, the to-be-processed character presented to the user may specifically be a small number of characters selected from multiple initial characters in the target font template. At the same time, in response to determining target edit content for the to-be-processed character, the multiple initial characters other than the to-be-processed character in the target font template may be edited by using the target edit content obtained for the small number of characters, to obtain multiple edited target characters, thereby constructing a complete character library for selecting to edit subtitle and the like. In this manner, because the user may directly participate in the design and creation of a font, the limitation is further reduced when a font format is selected.

Defects of the above solutions are all obtained by the inventors after practice and careful study. Therefore, the process of discovering the above problems and the solutions to the above problems proposed in the present disclosure below should be contributions made by the inventors to the present disclosure during the process of the present disclosure.

It should be noted that similar reference numbers and letters represent similar items in the following drawings. Therefore, once an item is defined in one drawing, it does not need to be further defined and explained in subsequent drawings.

The term "and/or" herein describes only an association relationship, indicating that three relationships may exist. For example, A and/or B may indicate the following three cases: only A exists, both A and B exist, and only B exists. In addition, the term "at least one" herein represents any one of multiple items or any combination of at least two of multiple items. For example, including at least one of A, B, and C may indicate including any one or more elements selected from a set composed of A, B, and C.

It may be understood that before the technical solutions disclosed in the embodiments of the present disclosure are used, the user shall be informed of the type, usage scope e, usage scenarios, etc., of personal information involved in the present disclosure in an appropriate manner and the authorization of the user shall be obtained in accordance with relevant laws and regulations.

For example, in response to receiving an active request from a user, prompt information is sent to the user to clearly inform the user that the requested operation will require acquisition and use of personal information of the user. As such, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only illustrative and does not limit the implementations of the present disclosure. Other manners that satisfy the relevant laws and regulations may also be applied in the implementations of the present disclosure.

To facilitate understanding of this embodiment, a method for font creation disclosed in an embodiment of the present disclosure is first described in detail. The execution body of the method for font creation provided in the embodiment of the present disclosure is generally a computer device with a certain computing power, and the computer device includes, for example, a terminal device, a server, or another processing device. The terminal device may be a user equipment (UE), a mobile device, a user terminal, a terminal, a cellular phone, a cordless phone, a personal digital assistant (PDA), a handheld device, a computing device, a vehicle-mounted device, a wearable device, etc. In some possible implementations, the font creation method may be implemented by a processor calling computer-readable instructions stored in a memory.

The following describes the method for font creation provided in the embodiment of the present disclosure. The method for font creation provided in the embodiment of the present disclosure may be specifically applied to an application scenario involving text addition, such as subtitle filling. For example, in a video clipping platform, as a related function when a font format is selected and added, a user may be provided with a usage scenario in which a font may be created and used.

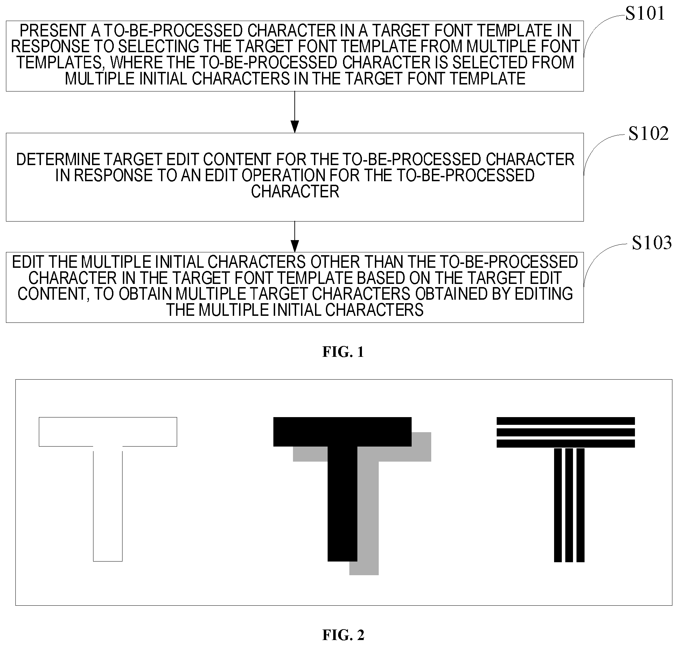

Fig. 1 is a flowchart of a method for font creation according to an embodiment of the present disclosure. The method includes steps S101 to S103, where:
S101: presenting a to-be-processed character in a target font template in response to selecting the target font template from multiple font templates, where the to-be-processed character is selected from multiple initial characters in the target font template;
S102: determining target edit content for the to-be-processed character in response to an edit operation for the to-be-processed character; and
S103: editing the multiple initial characters other than the to-be-processed character in the target font template based on the target edit content, to obtain multiple target characters obtained by editing the multiple initial characters.

The following describes the above steps S101 to S103 in detail.

For the above step S101, a font template is first described. In the embodiment of the present disclosure, the font template specifically indicates an initial template provided to the user during font creation, and is used to represent a basic font format that may be selected for a current design font. The basic font format here may reflect a presenting form of a font. Exemplarily, Fig. 2 illustrates different presenting forms of a same character "T" in multiple font templates according to an embodiment of the present disclosure.

In different presenting forms, the presented character has different features. For example, in three different presenting forms, the character T in a first presenting form is a character with a black outline and a white background, the character T in a second presenting form is a character completely filled with a black background and has a shadow, and the character T in a third presenting form is a character formed by combining lines.

In a possible case, if a user designs a font independently, for example, and a user is only provided with a blank page on which a font may be designed, as not all users have a high design capability, therefore, it is difficult for the user to design and produce a font completely. However, in the manner provided in the embodiment of the present disclosure, in which the user is provided with optional font templates, the user may create further based on an existing basic font form, thereby reducing the creation threshold for the user. In addition, for the user, an interested font may be first selected from the presented font templates for further creation, and design inspiration may also be provided to the user.

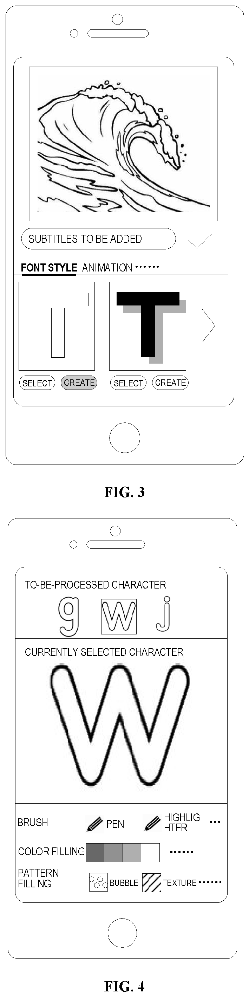

In order to enable the user to select a target font template from multiple font templates, specifically, a representative character in a font template may be presented. Exemplarily, Fig. 3 illustrates a schematic diagram of selecting a target font template according to an embodiment of the present disclosure. Fig. 3 specifically illustrates a scenario of selecting a font format for text when subtitles are added to a video. In response to a selection operation for a "font style" vertical category tag, font formats in multiple font templates may be presented, for example, the font formats of the character "T" in the first two font templates presented exemplarily in Fig. 2. Here, because the font formats in the font templates have been completely designed, they may be directly selected for use. For example, they may be directly used as the font format for presenting text through the "select" button below. Here, accordingly, when multiple font templates are determined, in a possible case, currently generated font templates may all be used as font templates available for creation.

For the presented font templates, further creation may be performed on their basis, for example, adding details such as highlights and textures when the fonts are presented. Therefore, a "create" button is further provided to select a target font template from the multiple font templates for creation.

Exemplarily, the selected target font template is, for example, the first font template presented in Fig. 3. Specifically, in response to a trigger operation for a corresponding "create" button, the to-be-processed character in the target font template may be continuously presented.

The following describes the to-be-processed character in the target font template. When a new font format is created, it is specifically created for characters stored in a character library. The characters stored in the character library may specifically include characters used to express words in various languages, such as Chinese characters, English letters, Korean characters, etc. In addition, it may also include symbols such as punctuation marks, mathematical symbols, phonetic symbols, etc. Taking the English letters as an example, even if it only contains 26 different English letters, if a user selects to design fonts for the 26 English letters one by one, it will take a lot of time and the efficiency is low.

Therefore, in the embodiment of the present disclosure, a to-be-processed character is specifically selected from multiple initial characters in a target font template selected by a user and provided to the user for design, to reduce design operations required by the user.

In a specific implementation, the to-be-processed character may be selected from the multiple initial characters in the target font template by: determining a character feature set matching the multiple initial characters, where the character feature set includes multiple character features, and any of the initial characters has at least one corresponding character feature in the character feature set; and selecting, from the multiple initial characters, at least one character whose character features include multiple character features in the character feature set, as the to-be-processed character.

Specifically, while selecting a character edited by the user and minimizing operation required by the user as much as possible, editing of other unedited characters may also be implemented through the character created and edited by the user. To achieve this objective, multiple initial characters in the target font template may be determined, and then some characters with universal features may be selected from the multiple initial characters and used as the to-be-processed character.

Here, for a simple illustration, the English letters are still used as an example. If the selected target font template is only for the English letters, the multiple initial characters in the target font template are also the 26 English letters.

When the to-be-processed character is selected from the multiple initial characters, a character feature set matching the multiple initial characters may be determined. The character feature set includes multiple character features, and the character features here are, for example, stroke features or structural features for forming the characters. For example, for the English letters, the stroke features include a straight line, a bend, a circle, and a dot; for Chinese characters, the stroke features include a horizontal stroke, a fold, a curved hook, etc., and the structural features include a parallel structure, an up-down structure, an enclosure structure, etc. The character features stored in the character feature set include all the character features included in the multiple initial characters. Correspondingly, any initial character is formed by one or more character features in the character feature set. For example, the letter "i" is formed by a straight line and a dot, and the character " 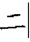 " is formed by two different horizontal strokes.

When a character is created and edited, it may be regarded as a process of creating character features in the character. Therefore, in order to "copy" and synchronize a creation result on some characters to other characters similarly, the selected to-be-processed character should cover all the character features in the character feature set. In this manner, the edit content obtained by creating on the to-be-processed character may be migrated and presented in other initial characters based on the character features.

Therefore, specifically, at least one character, whose character features include multiple character features in the character feature set, may be selected from the multiple initial characters as the to-be-processed character. The character features possessed by the to-be-processed character described here include multiple character features in the character feature set, and specifically indicate that the character features possessed by all the selected to-be-processed characters may cover multiple features in the character feature set. From the perspective of the character feature set, it means that each character feature in the character feature set may be ensured to be found in the character features under at least one to-be-processed character.

In addition, multiple to-be-processed characters may have a same character feature. Therefore, in a possible case, when the to-be-processed character in which the same character feature first appears is created and edited, the edit content under the character feature may also be directly and continuously synchronized to a position of the corresponding same character feature in another to-be-processed character presented to the user that corresponds.

Here, for ease of illustration, the case where the target font template is only for the English letters is also used as an example. In the case where the determined character feature set includes the straight line, the bend, the circle, and the dot, "g", "j", and "w" may be selected, as the to-be-processed characters, from the multiple initial characters including the 26 English letters. The three initial characters include all the character features described above, and the number of the three initial characters is small. Therefore, the number of objects that the user needs to create and edit may be reduced as much as possible while the edit content may be synchronized to other characters. The synchronized edit content here means synchronization in presenting effect, and specifically represents that the edit content obtained by editing the selected to-be-processed character is selected to be synchronized on other characters, so as to achieve a consistent font style effect.

For the selected to-be-processed characters, in order to enable the user to create and edit the to-be-processed characters, specifically, the to-be-processed characters may be presented to the user.

When the to-be-processed character is presented, the to-be-processed character may be presented in a font editing interface, where the font editing interface includes a presenting area for presenting the to-be-processed character and an editable area defined for the to-be-processed character.

Exemplarily, Fig. 4 illustrates a schematic diagram of a font editing page according to an embodiment of the present disclosure. In the font editing page, multiple to-be-processed characters are guided, arranged, and presented by "to-be-processed characters" in the upper part, and a character to be currently edited and processed may be selected from the multiple to-be-processed characters and presented in an enlarged scale in the "currently selected character". Optional editing tools are presented in the lower part of the font editing page, including a brush, color filling, pattern filling, etc.

The presented font editing page specifically includes a present area of the to-be-processed character, such as the area used to present the multiple to-be-processed characters in Fig. 4, and also includes the editable area defined for the to-be-processed character. For example, for the currently selected character "W" presented in Fig. 4, the editable area may be defined for it. For example, a blank area inside the character may be used as the editable area, and filling and editing are limited to be performed only inside the character. Alternatively, only an area outside the character may be used as the editable area, and decoration editing such as adding a shadow may be performed only outside the character. Still alternatively, both the inside and the outside of the character may be used as the editable area, so that the user may edit at any position of the character.

Here, the editable area defined for the to-be-processed character may be specifically determined based on an actual situation of the selected target font template. For example, the to-be-processed characters shown in Fig. 4 are hollow fonts per se, and therefore may be filled and decorated with patterns. Therefore, an area inside the fonts may be defined as the editable area. However, for a font having an existing pattern design inside, for example, a font whose interior has been filled with a texture, and the content inside the font has been relatively complete, an area outside the font may be selected as the editable area. Alternatively, an editable area may be selected for the target font template based on a selection operation of the user, and editing and creating may be completed in the editable area personally set by the user.

In a specific implementation, a font template that may be selected for further creation is specifically authorized by an original creator for secondary creation and use, and the editable area described above is also specifically determined with the authorization of the original creator.

For the above step S102, for the to-be-processed character presented in the font editing interface, the target edit content for the to-be-processed character may be determined in response to the edit operation.

Specifically, in combination with the description in the above embodiments, because the editable area may be determined for the to-be-processed character, the edit content obtained in the editable area may be used as the target edit content for the to-be-processed character in response to the edit operation for the to-be-processed character.

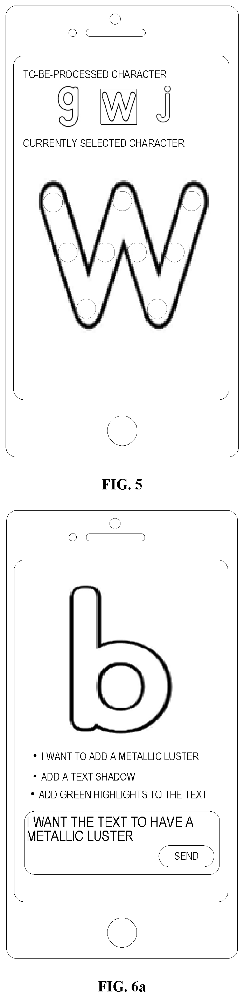

Exemplarily, Fig. 5 illustrates a presenting page of a selected to-be-processed character after editing according to an embodiment of the present disclosure. When the to-be-processed character is edited, the determined editable area is inside the character. It may be seen from a comparison between the edited to-be-processed character presented in the schematic diagram and the unedited to-be-processed character in Fig. 4 that a bubble style is specifically added to the to-be-processed character. Therefore, it may be determined that the edit content is a filled bubble shape in the editable area, and the filled bubble shape is used as the target edit content of the to-be-processed character.

In the above embodiments, the user may specifically select to edit the to-be-processed character with the editing tool. However, in actual applications, the user may have ideal edit content but may not be able to implement the edit content specifically. For example, the user expects to present a cheese filling effect or a metallic luster filling effect in the to-be-processed character, but the user cannot depict such an artistic effect with the provided brush tool.

In view of this situation, in the embodiments of the present disclosure, during an operation process in which the user edits the to-be-processed character, a neural network model or an algorithm related to image processing may also be used to assist the user in editing the to-be-processed character.

Specifically, in response to receiving edit description content for the to-be-processed character, an image generation model may be used to generate, based on the edit description content, the target edit content for the to-be-processed character under the edit description content. The image generation model here may be a pre-trained model, which may perform semantic analysis on input data, and edit an existing font image of the to-be-processed character according to a creation and editing intention obtained based on the semantic analysis, to output the target edit content for the to-be-processed character.

In a possible case, the edit description content may be directly used as the input data, so that the image generation model generates the target edit content based on the input data. In another possible case, the edit description content may also be used as the input data after sentence processing, so that the image generation model generates the target edit content. The sentence processing here includes, but is not limited to, adding further sentence definition or correcting incorrect words, which will not be elaborated here.

Exemplarily, Fig. 6a illustrates a schematic page diagram of using an image generation model to edit a to-be-processed character according to an embodiment of the present disclosure. A text box for edit content is specifically provided in the lower part of the page, and the user may input words or sentences in the text box to describe an expected edit effect on the to-be-processed character. For example, a description word "metallic luster" or a description sentence "I want the text to have a metallic luster" may be input in the text box. The information will be used as the edit description content, and the to-be-processed character may be edited and produced through the image generation model.

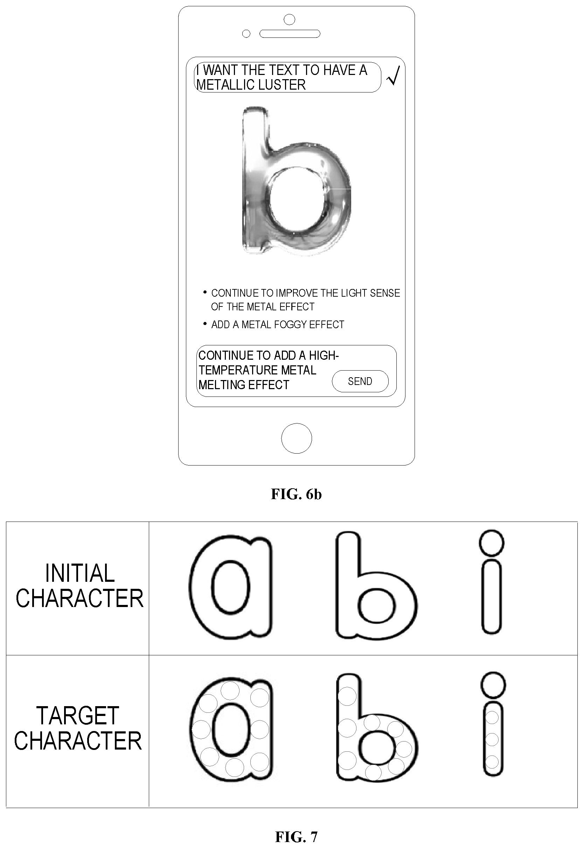

Exemplarily, as shown in Fig. 6b, the target edit content for the to-be-processed character may be obtained using the image generation model through the edit description content. For ease of presenting, the target edit content will be presented on the page together with the to-be-processed character. For example, if the selected to-be-processed character is "b", and the edit description content includes "I want the text to have a metallic luster", the letter "b" in an editing style having a metallic material effect may be presented in the page.

After viewing the to-be-processed character displayed through the target edit content in the page shown in Fig. 6b, the user may have other edit effects that he/she wants to try or add. In the embodiments of the present disclosure, in a possible case, new edit content may also be continuously added on the basis of the currently presented target edit content. For example, on the basis of the target edit content shown in Fig. 6b, by inputting "continue to add a high-temperature metal melting effect", a liquid flowing presenting effect may be continuously added through the image generation model. Here, the image generation model selected during secondary editing may be the same model as that selected during first editing, or may be replaced with another model that may implement the editing function, which is not limited here.

In another possible case, new edit description content may also be re-received, for example, "make the text present a cheese effect" is re-input, to generate a new text editing style. The operations may be specifically set according to the needs of the user, which is not limited here.

In addition, in order to assist the user in inputting the edit description content, multiple pieces of edit description content for selection and reference may be given in the form of examples above the text box. For example, three examples are specifically given above the text box in Fig. 6a. Similarly, after the target edit content is obtained and presented based on the edit description content using the image generation model, an example for reference may be continuously given based on the edit description content historically input. For example, two reference examples related to "I want the text to have a metallic luster" that is sent for the first time are presented in Fig. 6b.

In this manner, according to the description of the above embodiments, when the to-be-processed character is edited, the user may actively complete creation according to the user's own creation preference, or the creation may be completed with the assistance of the neural network model or the algorithm. In this manner, users with or without a creation basis may complete the editing of the to-be-processed character according to their own creation willingness, and the operation threshold is low.

For the above step S103, in the case where the target edit content for the to-be-processed character is determined according to the above manner, because only a small number of to-be-processed characters in the target font template are processed in the above font creation process, and multiple initial characters in the target font template actually need to be used when the font is used, in the embodiments of the present disclosure, the multiple initial characters other than the to-be-processed character in the target font template continue to be selected and edited based on the target edit content, to obtain the multiple target characters obtained by editing the multiple initial characters.

The editing of the multiple initial characters other than the to-be-processed character described here indicates, in effect, that the edit effect may be synchronized to an unedited character in the initial characters, that is, the unedited character other than the to-be-processed character in the multiple initial characters that is directly edited may also have the edited present effect. In terms of steps, the step indicated by editing the multiple initial characters other than the to-be-processed character may be synchronous or asynchronous. For example, when the edit operation is performed on the to-be-processed character, the obtained target edit content is synchronously edited to the unedited character. Alternatively, after the edit operation on the to-be-processed character ends, the unedited character continues to be edited using the confirmed target edit content, that is, the asynchronous implementation is completed.

Here, in a possible case, if the target edit content in the multiple initial characters is obtained by active editing of the user when the target edit content is determined, according to the above description, when the multiple initial characters are selected, the initial character including the multiple character features in the character feature set is specifically selected. Therefore, the edit content under the character feature may be synchronously "copied" to other unedited initial characters based on the initial character, to obtain the multiple edited target characters.

In a specific implementation, the following manner may be specifically adopted: determining, based on the target edit content, a target character feature selected in response to performing the edit operation on the to-be-processed character, and corresponding edit content under the target character feature; and editing the multiple initial characters other than the to-be-processed character based on the edit content under the target character feature and character features respectively possessed by the multiple initial characters other than the to-be-processed character, to obtain the multiple target characters obtained by editing the multiple initial characters.

Here, the description continues with reference to the example shown in Fig. 5. The target edit content for the to-be-processed character determined in response to the edit operation for the to-be-processed character specifically indicates, for example, that bubbles are supplemented at intervals under the character features of the straight line, the bend, and the circle, and the character feature corresponding to the dot is not processed. Then it may be determined that the selected target character features include the character features of the straight line, the bend, and the circle, and the corresponding edit content under the target character features includes the bubbles arranged at intervals.

Based on the target character features determined above and the edit content under the target character features, the multiple initial characters other than the to-be-processed character may be edited. According to the above description, the multiple initial characters other than the to-be-processed character have the same character features as the character features included in the to-be-processed character, and therefore may also be synchronously processed through the edit content under the target character features. For example, in addition to the to-be-processed characters "g", "w", and "j" described above, bubbles are arranged at intervals in a bend and a circle in the initial character "a", and bubbles are also arranged at intervals in a straight line in "i", but the dot in "i" is not processed at all.

Exemplarily, Fig. 7 illustrates a schematic diagram of edited target characters according to an embodiment of the present disclosure. A part of the obtained target characters is schematically shown in the figure by continuing with the edit content of selectively adding bubbles to the initial characters in the above example. For ease of intuitive understanding, a schematic diagram of the initial characters before editing and a schematic diagram of the corresponding target characters after editing are presented in the form of a table.

For the case where the image generation model is used to create the characters as described above, in a possible implementation, the editing result of one further initial character may also be determined according to the determined target character feature and the edit content under the target character feature in the manner described in the above embodiments, to obtain the multiple target characters obtained by editing the multiple initial characters.

In another possible case, in the above steps, when the edit operation is performed using the image generation model, all the initial characters may be directly used as the to-be-processed characters, so that all the initial characters are edited and processed together using the image generation model.

Here, the specific editing and processing manner to be selected may be determined according to the actual situation. For example, if the to-be-processed character is first edited using the image generation model and then the edit content is continuously added manually on this basis, it is more suitable to select the manner of determining the target character feature and the edit content under the target character feature to edit the multiple initial characters other than the to-be-processed character. If the editing result obtained using the image generation model is directly selected as the final font format to be used, all the initial characters may be directly edited and processed together using the image generation model.

In another embodiment of the present disclosure, the multiple edited target characters obtained may also be used to construct a target font library. For example, in the above embodiments, for the obtained English letters, the obtained target characters may be saved according to the alphabetical order. During storage, with reference to the storage manner of key-value pairs, the key may be stored as a letter, and the corresponding value is a storage address for storing the target character. In addition, because the target character in the picture format is specifically stored when the target character is stored, the size information, the font layout information, etc. of the picture corresponding to the target character may also be stored correspondingly. In addition, information such as a version, an author, a creation time, and a signature may also be recorded for improving the entire production link of uploading, configuration, and delivery when the font is rendered.

After the target font library is constructed for the target characters, the target font library may be used for subtitle editing. For example, when a video is clipped, a title or subtitle information may be added, and the text information may be presented in the font format in the target font library.

In a specific implementation, in response to selecting the target font library for subtitle editing, target characters respectively corresponding to multiple subtitle characters may be obtained from the target font library based on the multiple subtitle characters included in received subtitle information. The target characters respectively corresponding to the multiple subtitle characters are sequentially arranged based on a character sequence corresponding to the multiple subtitle characters, to generate a target subtitle to be presented.

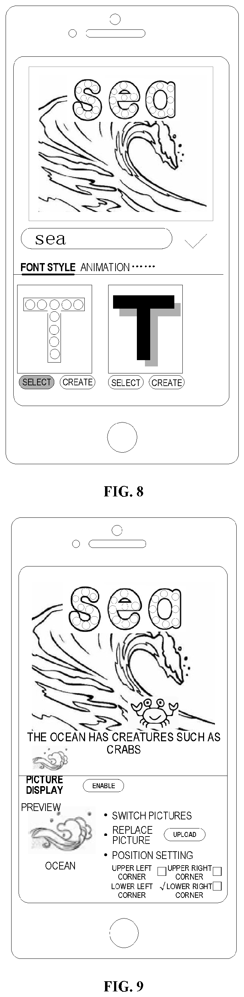

The description continues to use the English letters listed in the above embodiments as an example. During video clipping, the added subtitle information may be input. Exemplarily, Fig. 8 illustrates a schematic page diagram of adding subtitle information according to an embodiment of the present disclosure. Specifically, a presentation picture of a font template in the generated target font library is presented in the lower part of the page, and the target font library in the font template may be selected for use through the "select" button.

In Fig. 8, by inputting the subtitle information "sea" in a text box, three subtitle characters added during subtitle editing may be determined, including "s", "e", and "a". The corresponding target characters may be determined in the target font library through the letters of the three subtitle characters.

Then, the three target characters may be sequentially arranged according to the arrangement order of "s", "e", and "a", and presented at a position specified by the user. In the video frame image presented in the upper part of Fig. 8, the target subtitle presented using the target font library is specifically presented in the form of a title.

In the above subtitle creation manner, the characters themselves are specifically presented in the format font, and further, phrases, sentences, etc. formed by the characters may also be specifically decorated and supplemented. For example, for a feature phrase in the subtitle, a corresponding representative picture may be presented in association near the phrase presentation position, such as a simple drawing corresponding to a crab presented in the upper right corner of the phrase "crab", so that the presented subtitle is more vivid.

In a specific implementation, in response to the target subtitle including a target phrase composed of sequentially arranged subtitle characters and a to-be-presented picture associated with the target phrase being stored in a predetermined subtitle picture library, the to-be-presented picture may be presented in association based on a presenting position of the target phrase in the target subtitle.

Specifically, pictures that may be selected to be presented together with the subtitles may be stored in the subtitle picture library. For example, the presented pictures may be specifically stored through picture names. For example, a presented picture of a crab may be stored through the picture name "crab". In the target subtitle, if there is a target phrase related to "crab", the corresponding picture is read out from the subtitle library and presented in association. In a possible case, in order to reduce the occlusion of the subtitle itself, specifically, the to-be-presented picture is presented in association according to the presenting position of the target phrase in the target subtitle, for example, in the upper right corner or the lower left corner of the presenting position of the target phrase.

Exemplarily, Fig. 9 illustrates a schematic diagram of presenting an picture to be presented that is associated with a target phrase according to an embodiment of the present disclosure. For the subtitle content "the ocean has creatures such as crabs" presented under the video, the target phrase "crab" therein has an associated to-be-presented picture in the subtitle picture library, and therefore is presented in the upper right corner of the word "crab". In addition, the target phrase also includes "ocean", which also has an associated to-be-presented picture in the subtitle picture library, and accordingly is presented in the lower left corner of the word "ocean".

Here, exemplarily, the function of adding pictures to the subtitles may be enabled through the "picture presentation" button under the page. For any selected to-be-presented picture, it may also be replaced with other pictures stored in the subtitle picture library or a picture uploaded by the user by switching the picture or replacing the picture. In addition, a specific presenting position may also be set. For example, the position adjustment button may be used to present the to-be-presented picture in the upper left corner, the upper right corner, the lower left corner, the lower right corner or other positions of the target phrase. The specific setting manner here may be determined according to the actual situation, and only some possible examples are given above for illustration.

In this manner, when the presentation of the subtitles is optimized, it may not be limited to the optimization of the font, and pictures may also be added to the phrases in the subtitles, so that the presented subtitles are more vivid.

In addition, in another embodiment of the present disclosure, pictures or other design elements may also be added in a similar manner for the entire sentence in the subtitle. For example, for speech subtitles of different persons obtained through recognition, avatars of the corresponding persons may be presented at the beginnings of the sentences presented in the subtitles. Alternatively, for example, in cooperation with the style of the video, such as the description of the sea in the above example, an image such as a ship hull may be presented, and the subtitles are presented on the hull. The length of the hull dynamically changes with the display length of the subtitles.

Further, the subtitles may also be presented in a non-static manner. For example, words that express action effects in the subtitles may be presented with dynamic presentation effects under the corresponding actions, such as the effect of the hull shaking. With the above manner, the interest of subtitle presentation may also be increased, and at the same time, the dynamic presented danmaku better echo the content in the video.

It may be understood by those skilled in the art that in the above methods of specific implementations, the writing sequence of the steps does not mean that a strict execution sequence and does not constitute any limitation on the implementation process, and the specific execution sequence of the steps should be determined by the functions and possible internal logic.

Based on the same inventive concept, an embodiment of the present disclosure further provides an apparatus for font creation corresponding to the method for font creation. Because the principle of the apparatus for solving problems in the embodiment of the present disclosure is similar to the method for font creation in the embodiment of the present disclosure, the implementation of the apparatus may refer to the implementation of the method, and details are not repeated herein.

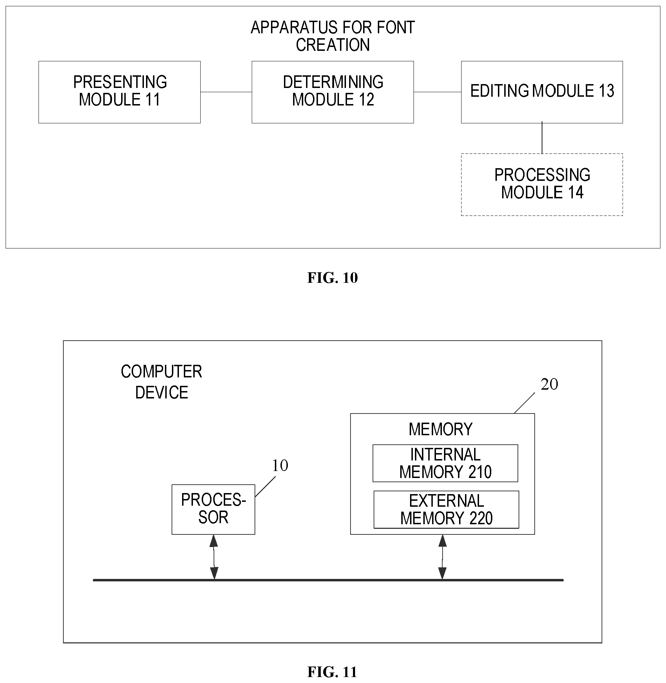

Fig. 10 is a schematic diagram of an apparatus for font creation according to an embodiment of the present disclosure. The apparatus includes a presenting module 11, a determining module 12, and an editing module 13.

The presenting module 11 is configured to present a to-be-processed character in a target font template in response to selecting the target font template from multiple font templates, where the to-be-processed character is selected from multiple initial characters in the target font template;
the determining module 12 is configured to determine target edit content for the to-be-processed character in response to an edit operation for the to-be-processed character; and
the editing module 13 is configured to edit the multiple initial characters other than the to-be-processed character in the target font template based on the target edit content, to obtain multiple target characters obtained by editing the multiple initial characters.

In an optional implementation, when presenting the to-be-processed character in the target font template, the presenting module 11 is configured to: present the to-be-processed character in a font editing interface, where the font editing interface includes a presenting area for presenting the to-be-processed character and an editable area defined for the to-be-processed character; and when determining the target edit content for the to-be-processed character in response to the edit operation for the to-be-processed character, the determining module 12 is configured to take, in response to the edit operation for the to-be-processed character, edit content obtained in the editable area as the target edit content for the to-be-processed character.

In an optional implementation, when determining the target edit content for the to-be-processed character in response to the edit operation for the to-be-processed character, the determining module 12 is configured to generate, in response to receiving edit description content for the to-be-processed character, the target edit content for the to-be-processed character under the edit description content based on the edit description content by using an image generation model.

In an optional implementation, the to-be-processed character is selected from the multiple initial characters in the target font template by: determining a character feature set matching the multiple initial characters, where the character feature set includes multiple character features, and any of the initial characters has at least one corresponding character feature in the character feature set; and selecting, from the multiple initial characters, at least one character whose character features comprise multiple character features in the character feature set, as the to-be-processed character.

In an optional implementation, when editing the multiple initial characters other than the to-be-processed character in the target font template based on the target edit content, to obtain the multiple target characters obtained by editing the multiple initial characters, the editing module 13 is configured to determine, based on the target edit content, a target character feature selected in response to performing the edit operation on the to-be-processed character and corresponding edit content under the target character feature; and edit the multiple initial characters other than the to-be-processed character based on the edit content under the target character feature and character features respectively possessed by the multiple initial characters other than the to-be-processed character, to obtain the multiple target characters obtained by editing the multiple initial characters.

In an optional implementation, the multiple target characters are configured to construct a target font library, and the apparatus further includes a processing module 14configured to obtain, in response to selecting the target font library for subtitle editing, target characters respectively corresponding to the multiple subtitle characters from the target font library and based on multiple subtitle characters included in received subtitle information; and arrange sequentially the target characters respectively corresponding to the multiple subtitle characters based on a character sequence corresponding to the multiple subtitle characters, to generate a target subtitle to be presented.

In an optional implementation, after generating the target subtitle to be presented, the processing module 14 is further configured to: present, in response to the target subtitle including a target phrase composed of sequentially arranged subtitle characters and a to-be-presented picture associated with the target phrase being stored in a predetermined subtitle picture library, the to-be-presented picture in association based on a present position of the target phrase in the target subtitle.

For the description of the processing flows of the modules in the apparatus and the interaction process among the modules, reference may be made to the relevant description in the above method embodiments, and details are not described herein again.

An embodiment of the present disclosure further provides a computer device. Fig. 11 is a schematic diagram of a structure of a computer device according to an embodiment of the present disclosure. The computer device includes:
a processor 10 and a memory 20; the memory 20 stores machine-readable instructions executable by the processor 10, the processor 10 is configured to execute the machine-readable instructions stored in the memory 20, and the machine-readable instructions, when executed by the processor 10, cause the processor 10 to perform the following steps:
presenting a to-be-processed character in a target font template in response to selecting the target font template from multiple font templates, where the to-be-processed character is selected from multiple initial characters in the target font template; determining target edit content for the to-be-processed character in response to an edit operation for the to-be-processed character; and editing the multiple initial characters other than the to-be-processed character in the target font template based on the target edit content, to obtain multiple target characters obtained by editing the multiple initial characters.

The memory 20 includes an internal memory 210 and an external memory 220. The memory 210 herein is also referred to as an inner memory, and is used to temporarily store operation data in the processor 10 and data exchanged with the external memory 220 such as a hard disk. The processor 10 performs data exchange with the external memory 220 through the memory 210.

For the specific execution process of the above instructions, reference may be made to the steps of the font creation method in the embodiments of the present disclosure, and details are not described herein again.

An embodiment of the present disclosure further provides a computer-readable storage medium, where a computer program is stored on the computer-readable storage medium, and the computer program, when executed by a processor, causes the steps of the method for font creation in the above method embodiments to be performed. The storage medium may be a volatile or non-volatile computer-readable storage medium.

An embodiment of the present disclosure further provides a computer program product, where the computer program product carries program codes, and the instructions included in the program codes may be used to perform the steps of the method for font creation in the above method embodiments. For details, reference may be made to the above method embodiments, and details are not described herein again.

The computer program product may be implemented in hardware, software, or a combination thereof. In an optional embodiment, the computer program product is embodied as a computer storage medium. In another optional embodiment, the computer program product is embodied as a software product, such as a software development kit (SDK).

Those skilled in the art may clearly understand that, for the convenience and simplicity of description, for the specific working process of the systems and apparatuses described above, reference may be made to the corresponding process in the foregoing method embodiments, and details are not described herein again. It should be understood that the systems, apparatuses, and methods disclosed in some embodiments of the present disclosure may be implemented in other manners. The apparatus embodiments described above are merely exemplary. For example, the division of units is merely logical function division and may be divided by other ways in the actual implementation. For example, the various elements or components may be combined or integrated in another system or certain features may be omitted, or not implemented. In addition, other items shown or discussed as coupled, directly coupled, or communicating with each other may be indirectly coupled or communicating through some communication interface, apparatus, or device whether electrically, mechanically, or otherwise.

The units described as separate parts may be or may not be physically separate, and parts displayed as units may be or may not be physical units, that is, they may be located in one position, or may be distributed on multiple network units. Some or all of the units may be selected according to actual needs to realize the objectives of the solutions of the embodiments.

In addition, the functional units in the embodiments of the present disclosure may be integrated into one processing unit; each unit may also exist physically alone, or two or more units may be integrated into one unit.

If the functions are implemented in the form of software functional units and sold or used as independent products, they may be stored in a non-volatile computer-readable storage medium executable by a processor. Based on this understanding, the technical solutions of the present disclosure may be embodied in the form of a software product. The software product is stored in a storage medium and includes several instructions for causing a computer device (which may be a personal computer, a server, or a network device) to perform all or some of the steps of the methods described in the embodiments of the present disclosure. The foregoing storage medium includes a medium that may store program codes, such as a USB flash disk, a mobile hard disk, a read-only memory (ROM), a random access memory (RAM), a magnetic disk, or an optical disc.

Finally, it should be noted that the above embodiments are merely specific implementations of the present disclosure, and are used to illustrate the technical solutions of the present disclosure, rather than limiting the scope of protection of the present disclosure. Although the present disclosure has been described in detail with reference to the foregoing embodiments, those of ordinary skill in the art should understand that any person skilled in the art may still modify or easily conceive of changes to the technical solutions recited in the foregoing embodiments, or equivalently replace some of the technical features within the technical scope disclosed in the present disclosure. These modifications, changes, or substitutions do not make the essence of the corresponding technical solutions depart from the spirit and scope of the technical solutions of the embodiments of the present disclosure, and shall fall within the scope of protection of the present disclosure. Therefore, the scope of protection of the present disclosure shall be subject to the scope of protection of the claims.

## Claims

1. A method for font creation, comprising:
presenting a to-be-processed character in a target font template in response to selecting the target font template from multiple font templates, wherein the to-be-processed character is selected from multiple initial characters in the target font template;
determining target edit content for the to-be-processed character in response to an edit operation for the to-be-processed character; and
editing the multiple initial characters other than the to-be-processed character in the target font template based on the target edit content, to obtain multiple target characters obtained by editing the multiple initial characters.

2. The method of claim 1, wherein presenting the to-be-processed character in the target font template comprises:
presenting the to-be-processed character in a font editing interface, wherein the font editing interface comprises a presenting area for presenting the to-be-processed character and an editable area defined for the to-be-processed character; and
determining the target edit content for the to-be-processed character in response to the edit operation for the to-be-processed character comprises:
taking, in response to the edit operation for the to-be-processed character, edit content obtained in the editable area as the target edit content for the to-be-processed character.

3. The method of claim 1 or 2, wherein determining the target edit content for the to-be-processed character in response to the edit operation for the to-be-processed character comprises:
generating, in response to receiving edit description content for the to-be-processed character, the target edit content for the to-be-processed character under the edit description content based on the edit description content by using an image generation model.

4. The method of claim 1, wherein the to-be-processed character is selected from the multiple initial characters in the target font template by:
determining a character feature set matching the multiple initial characters, wherein the character feature set comprises multiple character features, and any of the initial characters has at least one corresponding character feature in the character feature set; and
selecting, from the multiple initial characters, at least one character whose character features comprise multiple character features in the character feature set, as the to-be-processed character.

5. The method of claim 1, wherein editing the multiple initial characters other than the to-be-processed character in the target font template based on the target edit content, to obtain the multiple target characters obtained by editing the multiple initial characters comprises:
determining, based on the target edit content, a target character feature selected in response to performing the edit operation on the to-be-processed character, and corresponding edit content under the target character feature; and
editing the multiple initial characters other than the to-be-processed character based on the edit content under the target character feature and character features respectively possessed by the multiple initial characters other than the to-be-processed character, to obtain the multiple target characters obtained by editing the multiple initial characters.

6. The method of claim 1, wherein the multiple target characters are configured to construct a target font library, and the method further comprises:
obtaining, in response to selecting the target font library for subtitle editing, target characters respectively corresponding to the multiple subtitle characters from the target font library and based on multiple subtitle characters comprised in received subtitle information; and
arranging sequentially the target characters respectively corresponding to the multiple subtitle characters based on a character sequence corresponding to the multiple subtitle characters, to generate a target subtitle to be presented.

7. The method of claim 6, wherein after generating the target subtitle to be presented, the method further comprises:
presenting, in response to the target subtitle comprising a target phrase composed of sequentially arranged subtitle characters and a to-be-presented picture associated with the target phrase being stored in a predetermined subtitle picture library, the to-be-presented picture in association based on a presenting position of the target phrase in the target subtitle.

8. An apparatus for font creation, comprising:
a presenting module configured to present a to-be-processed character in a target font template in response to selecting the target font template from multiple font templates, wherein the to-be-processed character is selected from multiple initial characters in the target font template;
a determining module configured to determine target edit content for the to-be-processed character in response to an edit operation for the to-be-processed character; and
an editing moduleconfigured to edit the multiple initial characters other than the to-be-processed character in the target font template based on the target edit content, to obtain multiple target characters obtained by editing the multiple initial characters.

9. A computer device, comprising: a processor and a memory, wherein the memory stores machine-readable instructions executable by the processor, the processor is configured to execute the machine-readable instructions stored in the memory, and the machine-readable instructions, when executed by the processor, cause the processor to perform a method for font creation, the method comprising:
presenting a to-be-processed character in a target font template in response to selecting the target font template from multiple font templates, wherein the to-be-processed character is selected from multiple initial characters in the target font template;
determining target edit content for the to-be-processed character in response to an edit operation for the to-be-processed character; and
editing the multiple initial characters other than the to-be-processed character in the target font template based on the target edit content, to obtain multiple target characters obtained by editing the multiple initial characters.

10. The computer device of claim 9, wherein presenting the to-be-processed character in the target font template comprises:
presenting the to-be-processed character in a font editing interface, wherein the font editing interface comprises a presenting area for presenting the to-be-processed character and an editable area defined for the to-be-processed character; and
determining the target edit content for the to-be-processed character in response to the edit operation for the to-be-processed character comprises:
taking, in response to the edit operation for the to-be-processed character, edit content obtained in the editable area as the target edit content for the to-be-processed character.

11. The computer device of claim 9 or 10, wherein determining the target edit content for the to-be-processed character in response to the edit operation for the to-be-processed character comprises:
generating, in response to receiving edit description content for the to-be-processed character, the target edit content for the to-be-processed character under the edit description content based on the edit description content by using an image generation model.

12. The computer device of claim 9, wherein the to-be-processed character is selected from the multiple initial characters in the target font template by:
determining a character feature set matching the multiple initial characters, wherein the character feature set comprises multiple character features, and any of the initial characters has at least one corresponding character feature in the character feature set; and
selecting, from the multiple initial characters, at least one character whose character features comprise multiple character features in the character feature set, as the to-be-processed character.

13. The computer device of claim 9, wherein editing the multiple initial characters other than the to-be-processed character in the target font template based on the target edit content, to obtain the multiple target characters obtained by editing the multiple initial characters comprises:
determining, based on the target edit content, a target character feature selected in response to performing the edit operation on the to-be-processed character and corresponding edit content under the target character feature; and
editing the multiple initial characters other than the to-be-processed character based on the edit content under the target character feature and character features respectively possessed by the multiple initial characters other than the to-be-processed character, to obtain the multiple target characters obtained by editing the multiple initial characters.

14. The computer device of claim 9, wherein the multiple target characters are configured to construct a target font library, and the method further comprises:
obtaining, in response to selecting the target font library for subtitle editing, target characters respectively corresponding to the multiple subtitle characters from the target font library and based on multiple subtitle characters comprised in received subtitle information; and
arranging sequentially the target characters respectively corresponding to the multiple subtitle characters based on a character sequence corresponding to the multiple subtitle characters, to generate a target subtitle to be presented.

15. The computer device of claim 14, wherein after generating the target subtitle to be presented, the method further comprises:
presenting, in response to the target subtitle comprising a target phrase composed of sequentially arranged subtitle characters and a to-be-presented picture associated with the target phrase being stored in a predetermined subtitle picture library, the to-be-presented picture in association based on a presenting position of the target phrase in the target subtitle.

16. A computer-readable storage medium having a computer program stored thereon, wherein the computer program, when run by a computer device, causes the computer device to perform a method for font creation, the method comprising:
presenting a to-be-processed character in a target font template in response to selecting the target font template from multiple font templates, wherein the to-be-processed character is selected from multiple initial characters in the target font template;
determining target edit content for the to-be-processed character in response to an edit operation for the to-be-processed character; and
editing the multiple initial characters other than the to-be-processed character in the target font template based on the target edit content, to obtain multiple target characters obtained by editing the multiple initial characters.

17. The computer-readable storage medium of claim 16, wherein presenting the to-be-processed character in the target font template comprises:
presenting the to-be-processed character in a font editing interface, wherein the font editing interface comprises a presenting area for presenting the to-be-processed character and an editable area defined for the to-be-processed character; and
determining the target edit content for the to-be-processed character in response to the edit operation for the to-be-processed character comprises:
taking, in response to the edit operation for the to-be-processed character, edit content obtained in the editable area as the target edit content for the to-be-processed character.

18. The computer-readable storage medium of claim 16 or 17, wherein determining the target edit content for the to-be-processed character in response to the edit operation for the to-be-processed character comprises:
generating, in response to receiving edit description content for the to-be-processed character, the target edit content for the to-be-processed character under the edit description content based on the edit description content by using an image generation model.

19. The computer-readable storage medium of claim 16, wherein the to-be-processed character is selected from the multiple initial characters in the target font template by:
determining a character feature set matching the multiple initial characters, wherein the character feature set comprises multiple character features, and any of the initial characters has at least one corresponding character feature in the character feature set; and
selecting, from the multiple initial characters, at least one character whose character features comprise multiple character features in the character feature set, as the to-be-processed character.

20. The computer-readable storage medium of claim 16, wherein editing the multiple initial characters other than the to-be-processed character in the target font template based on the target edit content, to obtain the multiple target characters obtained by editing the multiple initial characters comprises:
determining, based on the target edit content, a target character feature selected in response to performing the edit operation on the to-be-processed character and corresponding edit content under the target character feature; and
editing the multiple initial characters other than the to-be-processed character based on the edit content under the target character feature and character features respectively possessed by the multiple initial characters other than the to-be-processed character, to obtain the multiple target characters obtained by editing the multiple initial characters.
